# EUROPÄISCHE PATENTSCHRIFT

(11) **EP 2 745 014 B1**
(45) Veröffentlichungstag und Bekanntmachung des Hinweises auf die Patenterteilung: **31.07.2019**
(21) Anmeldenummer: 12743143.5
(22) Anmeldetag: 01.08.2012
(51) Int. Cl.: F04C 3/08, F04C 15/00

(54) **MOTOR-PUMPEN-KOMBINATION**
MOTOR/PUMP COMBINATION
ASSOCIATION POMPE-MOTEUR

(30) Priorität: 17.08.2011 DE 102011081142
(43) Veröffentlichungstag der Anmeldung: 25.06.2014
(73) Patentinhaber: Robert Bosch GmbH, 70442 Stuttgart (DE)
(72) Erfinder: KLENGE, Stefan, 70839 Gerlingen (DE); WACKENHUT, Martin, 5506 Mägenwil (CH)
(86) Internationale Anmeldenummer: PCT/EP2012/065017
(87) Internationale Veröffentlichungsnummer: WO 2013/023916

(56) Entgegenhaltungen:
- WO-A1-02/061274
- WO-A1-03/055551
- DE-A1- 4 241 320
- DE-A1-102008 038 625

## Beschreibung

### Stand der Technik

Die vorliegende Erfindung betrifft eine Drehkolbenmaschine, die als Pumpe, Verdichter, Motor oder Generator arbeitet, mit einem ersten Rotor und einem zweiten Rotor.

Aus der DE 42 41320 A1 ist eine Drehkolbenmaschine bekannt, die als Pumpe, Verdichter oder Motor arbeitet. Bei dieser laufen Kämme von Zähnen eines rotierenden Antriebsteils zur Begrenzung von Arbeitsräumen auf einer zykloiden Fläche eines ebenfalls verzahnten Abtriebsteils und treiben dabei dieses Abtriebsteil an. Zwischen den Zähnen von Antriebsteil und Abtriebsteil werden die genannten Arbeitsräume gebildet, die während des Rotierens der Teile für ihre Arbeit vergrößert bzw. verkleinert werden, um die Förderwirkung auf ein gasförmiges oder flüssiges Medium zu erzeugen. Derartige Antriebs- und Abtriebsteile laufen in einem gemeinsamen Gehäuse, dessen Innenraum kugelförmig ausgebildet ist.

In der Regel werden Drehkolbenmaschinen derart gestaltet, dass an den Rotoren Achsstummel fest verbunden sind, die zur radialen und/oder axialen Lagerung in einem die Rotoren umgehenden Gehäuse dienen. Zum Betrieb ragt einer dieser Achsstummel aus dem Gehäuse und wird an eine Antriebseinheit, beispielsweise einen Elektromotor, gekoppelt. Bei derartigen Einheiten können Dichtungsprobleme des aus dem Gehäuse herausragenden Achsstummels bezüglich des durch die Rotoren zu verdrängenden und/oder zu verdichtenden Fluids entstehen. Weiterhin benötigen derartige Drehkolbenmaschinen viel Bauraum.

### Zusammenfassung der Erfindung

Somit kann ein Bedürfnis bestehen, eine Drehkolbenmaschine bezüglich ihrer Bauweise kompakt auszuführen.

Das Bedürfnis kann durch die Gegenstände der unabhängigen Ansprüche befriedigt werden. Durch die Unteransprüche ergeben sich weitere vorteilhafte Ausgestaltungen der Erfindung.

Gemäß einem ersten Ausführungsbeispiel der Erfindung wird eine Drehkolbenmaschine, die als Pumpe, Verdichter oder Motor arbeitet, mit einem ersten Rotor und einem zweiten Rotor bereitgestellt, wobei der erste Rotor dem zweiten Rotor gegenüberliegend angeordnet ist. Der erste Rotor weist eine erste Stirnfläche mit einer ersten Verzahnung auf. Der zweite Rotor weist eine zweite Stirnfläche mit einer zweiten Verzahnung auf. Die erste und die zweite Verzahnung sind je aus zumindest einem Zahn gebildet. Die Verzahnungen stehen miteinander derart in Eingriff, dass durch Kämmen der Zähne der ersten Verzahnung und der Zähne der zweiten Verzahnung Arbeitsräume ausgebildet werden, wobei durch die Arbeitsräume gebildete Volumina durch das Kämmen der Zähne verändert werden. Die Rotoren sind von einem Gehäuse mit einer Innenwandung aufgenommen, wobei die Innenwandung weitgehend einer Außenkontur der Rotoren nachgebildet ist. Der erste Rotor weist eine erste Drehachse auf. Der zweite Rotor weist eine zweite Drehachse auf. Die erste Drehachse und die zweite Drehachse schließen einen Winkel ein, der ungleich 0° ist. Ein mit dem Gehäuse in translatorischer Richtung fest verbundenes erstes Achselement ragt in den ersten Rotor hinein. Ein mit dem Gehäuse in translatorischer Richtung fest verbundenes zweites Achselement ragt in den zweiten Rotor hinein. Das erste Achselement und der erste Rotor sowie das zweite Achselement und der zweite Rotor wirken derart zusammen, dass die Rotoren drehbar in dem Gehäuse geführt sind.

Hierdurch lässt sich eine besonders platzsparende Anordnung einer Drehkolbenmaschine schaffen. Die Lagerung der Rotoren wird hier in den Rotoren selbst vorgenommen. In der Regel handelt es sich bei dem ersten und dem zweiten Achselement um Zylinder mit einem kreisförmigen Querschnitt.

Auch können die Mittelachsen von derartigen Zylindern mit der Drehachse des jeweiligen Rotors zusammenfallen. Das erste und das zweite Achselement können neben einer radialen Führung der Rotoren auch deren axiale Führung übernehmen. Die Rotoren können zu den Achselementen korrespondierende Öffnungen aufweisen, so dass die Rotoren, insbesondere wenn sie aus einem gleitfähigen Material wie beispielsweise Kunststoff gefertigt sind, sich direkt auf diesen Achselementen drehen. Die Öffnungen in den Rotoren können derart gestaltet sein, dass in den Öffnungen Lager wie beispielsweise Gleit- oder Wälzlager aufgenommen werden, die dann mit den einzelnen Achselementen zusammenwirken.

Gemäß einem weiteren Ausführungsbeispiel der Erfindung ist das erste und das zweite Achselement mit dem Gehäuse einstückig ausgeführt.

Diese Ausgestaltung bietet sich insbesondere an, wenn das Gehäuse als Spritzgussteil für Metallspritzguss oder Kunststoffspritzguss ausgebildet ist. Das Gehäuse kann zweiteilig ausgeführt sein, wobei eine das Gehäuse trennende Trennebene zum einen senkrecht zu einer durch die beiden Drehachsen aufgespannte Ebene steht und zum anderen eine Gerade aufnimmt, welche den größeren zwischen den beiden Drehachsen eingeschlossenen Winkel halbiert. Die hierbei entstehende erste und zweite Gehäusehälfte können identisch ausgeführt sein.

Gemäß einem weiteren Ausführungsbeispiel der Erfindung ist ein zur Fertigung des ersten und/oder des zweiten Achselements verwendeter Werkstoff von einem zur Fertigung des Gehäuses verwendeten Werkstoff unterschiedlich. So kann beispielsweise das Gehäuse aus Kunststoff und die Achselemente aus Metall gefertigt sein. Wenn das Gehäuse beispielsweise als Aluminium-Zink-Spritzgussteil gefertigt ist, können die entsprechenden Achselemente aus einem anderen Werkstoff wie beispielsweise Stahl gefertigt sein. Weiterhin ist es möglich, fertige Achselemente in eine Spritzgussform einzulegen, um anschließend die entsprechenden Gehäusehälfte abzuspritzen.

Gemäß einem weiteren Ausführungsbeispiel der Erfindung wird eine Drehkolbenmaschine, die als Pumpe, Verdichter, Motor oder Generator arbeitet, mit einem ersten Rotor und einem zweiten Rotor bereitgestellt, wobei der erste Rotor dem zweiten Rotor gegenüberliegend angeordnet ist. Der erste Rotor weist eine erste Stirnfläche mit einer ersten Verzahnung auf. Der zweite Rotor weist eine zweite Stirnfläche mit einer zweiten Verzahnung auf. Die erste und die zweite Verzahnung sind je aus zumindest einem Zahn gebildet. Die Verzahnung stehen miteinander derart in Eingriff, dass durch Kämmen der Zähne der ersten Verzahnung und der Zähne der zweiten Verzahnung Arbeitsräume ausgebildet werden. Durch die Arbeitsräume gebildete Volumina werden durch das Kämmen der Zähne verändert. Die Rotoren sind von einem Gehäuse mit einer Innenwandung aufgenommen, wobei die Innenwandung weitgehend einer Außenkontur der Rotoren nachgebildet ist. Der erste Rotor weist eine erste Drehachse auf. Der zweite Rotor weist eine zweite Drehachse auf. Die erste Drehachse und die zweite Drehachse schließen einen Winkel ein, der ungleich 0° ist. Wenigstens ein erster Magnet mit permanentem Magnetfeld erstreckt sich in Richtung einer ersten Erstreckungsachse, wobei der wenigstens eine erste Magnet ein als Südpol ausgebildetes erstes Ende und ein als Nordpol ausgebildetes dem ersten Ende gegenüberliegendes zweites Ende aufweist. Der wenigstens eine erste Magnet ist an dem ersten und/oder dem zweiten Rotor angeordnet ist. Die erste Erstreckungsachse berührt eine Kreislinie mit einem Mittelpunkt und einem Durchmesser, wobei die Kreislinie eine Kreisfläche begrenzt. Der Mittelpunkt liegt auf der jeweiligen Drehachse. Die Kreisfläche steht im Wesentlichen senkrecht auf die jeweilige Drehachse. Der Durchmesser ist größer oder gleich Null. Das Gehäuse weist wenigstens eine elektrisch steuerbare Spule auf, die bezüglich der Drehachsen im Wesentlichen radial angeordnet ist, wobei die wenigstens eine Spule fest mit dem Gehäuse verbunden ist. Im Betrieb wirkt die wenigstens eine elektrisch steuerbare Spule derart mit dem wenigstens einen ersten Magnet zusammen, dass sich der Rotor dreht.

Die hier beschriebenen Magnete können beispielsweise als Stabmagnet gestaltet sein. Die Spule kann mit dem Gehäuse derart verbunden sein, dass zumindest die Spule nicht um eine der Drehachsen der Rotoren rotieren kann. Auch kann die Spule mit dem Gehäuse in rotatorischer und translatorischer Richtung fest verbunden sein. Die Spule kann gegenüber dem Gehäuse elektrisch isoliert sein. Dies kann beispielsweise dadurch bewirkt werden, dass das Gehäuse aus elektrisch nicht leitfähigem Kunststoff gefertigt ist. Weiterhin kann die Spule derart an dem Gehäuse angeordnet sein, dass die Spule keinen Kontakt mit dem durch die Rotoren zu verdrängenden und/oder zu verdichtenden Fluid hat. Dadurch, dass Permanentmagnete in den Rotoren integriert sind und die zur Rotation der Rotoren notwendigen Spulen mit dem Gehäuse verbunden sind, ist zum einen eine kompakte Gehäusegestaltung möglich. Zum anderen lassen sich Dichtungsprobleme vermeiden, wie sie aus dem Stand der Technik aufgrund von durch das Gehäuse hindurch in die Umgebung führende Achsen bekannt sind, da keine Bestandteile der Rotoren in die Umgebung geführt werden müssen.

Gemäß einem weiteren Ausgestaltungsbeispiel der Erfindung erstreckt sich wenigstens ein zweiter Magnet mit permanentem Magnetfeld in Richtung einer zweiten Erstreckungsachse, wobei der zweite Magnet ein als Südpol ausgebildetes erstes Ende und ein als Nordpol ausgebildetes dem ersten Ende gegenüberliegendes zweites Ende aufweist. Der wenigstens eine erste und der wenigstens eine zweite Magnet sind in dem ersten und/oder dem zweiten Rotor derart eingebettet, dass das erste Ende des wenigstens einen ersten Magneten diametral dem zweiten Ende des wenigstens einen zweiten Magneten gegenüberliegend angeordnet ist. Die zweite Erstreckungsachse berührt die Kreislinie.

Die beiden Erstreckungsachsen können derart angeordnet sein, dass sie fluchten. Weiterhin können diese beiden fluchtenden Erstreckungsachsen derart angeordnet sein, dass sie senkrecht zur jeweiligen Drehachse stehen. Auch ist es möglich, dass die erste Erstreckungsachse und die zweite Erstreckungsachse einen Winkel einschließen, der ungleich 0° oder 180° ist. Auch können die beiden Erstreckungsachsen zueinander windschief angeordnet sein. Die einzelnen Erstreckungsachsen können auch derart ausgerichtet sein, dass sie senkrecht auf den kugelringförmig ausgebildeten Teilbereich der Innenwandung stehen, der die Arbeitsräume radial in Richtung des Gehäuses abdichtet. Selbstverständlich ist eine gleiche Anzahl von ersten Magneten und zweiten Magneten erforderlich, um eine zu der kugelringförmigen Außenkontur weisende alternierende Anordnung von Nord- und Südpolen der Magnete zu bewirken.

Gemäß einem weiteren Ausführungsbeispiel der Erfindung ist der wenigstens eine erste Magnet und/oder der wenigstens eine zweite Magnet in dem ersten und/oder dem zweiten Rotor eingebettet.

Unter Einbetten ist hier zu verstehen, dass die Magneten teilweise oder vollständig von dem Werkstoff, aus dem die Rotoren gefertigt sind, umschlossen sind. Somit kann der Rotor derart ausgestaltet sein, dass die Magneten nicht mit dem mittels der Rotoren zu verdrängenden oder zu verdichtenden Fluid in Berührung kommen.

Gemäß einem weiteren Ausführungsbeispiel der Erfindung ist der wenigstens eine Magnet in dem wenigstens einen Zahn der ersten Verzahnung oder in dem wenigstens einen Zahn der zweiten Verzahnung eingebettet.

In der Regel wird die Anzahl der Zähne der jeweiligen Verzahnung, in die die Magnete eingebettet sind, eine gerade Zahl sein, also 2, 4, 6 usw. Insbesondere können die Magneten, die in den jeweiligen Zähnen eingebettet sind, dem sich radial erstreckenden Zahnkopf nachgebildet sein. In der Regel wird der Zahnkopf von dem Gehäuse in Richtung der jeweiligen Drehachse hin ansteigen oder abfallen. Somit wird der Zahnkopf mit der jeweiligen Drehachse des Rotors einen Winkel einschließen, der ungleich 90° ist. Somit werden auch die jeweiligen Erstreckungsachsen der Magnete, die als Stabmagnete ausgebildet sein können, einen Winkel zu der jeweiligen Drehachse des Rotors einnehmen, der ungleich 90° ist.

### Gemäß einem weiteren Ausführungsbeispiel der Erfindung ist der erste und/oder zweite Magnet der Drehkolbenmaschine als Stabmagnet ausgebildet

Gemäß einem weiteren Ausführungsbeispiel der Erfindung sind das erste Ende des wenigstens einen ersten Magneten und das zweite Ende des wenigstens einen zweiten Magneten mittels eines Rückschlusskerns verbunden, wobei der Rückschlusskern als Ring ausgebildet ist. Der Ring ist in einem der Rotoren eingebettet.

In der Regel weisen Rotoren zur Abdichtung der Arbeitsräume nach innen zur Drehachse hin ein halbkugelförmiges Element auf. Hierbei kann der Ring beispielsweise in diesem halbkugelförmigen Element eingebettet werden. Beispielsweise kann der Ring aus Weicheisen hergestellt sein.

Gemäß einem weiteren Ausführungsbeispiel der Erfindung ist an der ersten Verzahnung ein erstes Stützelement und an der zweiten Verzahnung ein zweites Stützelement zur Aufnahme von an den Verzahnungen während des Verdrängens und/oder Verdichtens von Fluid auftretenden Kräften angeformt, wobei der wenigstens eine Magnet in wenigstens einem der beiden Stützelemente eingebettet ist.

Dieses Stützelement ist nicht verwechseln mit den aus dem Stand der Technik bekannten Achsstummeln, die zur Lagerung der Rotoren oder auch zum Antrieb der Rotoren dienen. Vielmehr handelt es sich bei dem Stützelement um eine Materialanhäufung unterhalb eines Zahnfußes der jeweiligen Verzahnung, so dass, wenn das Fluid verdichtet und/oder verdrängt wird, es nicht zu einem Nachgeben des Zahnfußes aufgrund der Krafteinwirkung des Fluids kommt, welches den Wirkungsgrad der Drehkolbenmaschine verringern würde. In der Regel schließen sich die Stützelemente absatzlos an die kugelförmige Außenkontur des jeweiligen Rotors an. Diese Stützelemente können mit dem Rotor einstückig ausgebildet sein. Meist schließen diese Stützelemente die Rotoren der Stirnfläche gegenüberliegend plan ab. Die Stützelemente können mit der Stirnfläche vollflächig fest verbunden sein.

Gemäß einem weiteren Ausführungsbeispiel der Erfindung sind der erste und/oder der zweite Rotor zumindest teilweise aus einem nach der Herstellung der Rotoren magnetisierbaren Kunststoff gefertigt.

Die Drehkolbenmaschine kann selbstverständlich derart gestaltet werden, dass sowohl der erste als auch der zweite Rotor angetrieben werden. Weiterhin können sich zwischen dem ersten Rotor und dem zweiten Rotor auch ein oder mehrere Zwischenrotoren befinden. Aus magnetisierbarem Kunststoff hergestellte Rotoren werden hauptsächlich zur Verdichtung und/oder Verdrängung von gasförmigen nicht korrosiven Fluiden verwendet. Zur Förderung oder Verdichtung von korrosiven Gasen oder Flüssigkeiten werden die aus magnetisierbaren Kunststoff hergestellten Rotoren in der Regel gegenüber dem Fluid mit einem gegenüber dessen korrosiven Eigenschaften beständigen Material, insbesondere Kunststoff, beschichtet. Auch kann die Beschichtung derart gestaltet sein, dass sie einem Fluid mit abrasiven Partikeln widersteht. In der Regel wird der magnetisierbare Kunststoff die Permanentmagneten ersetzen.

Gemäß einem weiteren Ausführungsbeispiel der Erfindung ist jede Spule auf einem eigenen Zahnelement angeordnet, wobei die Zahnelemente untereinander magnetisch leitfähig miteinander verbunden sind. Die kann beispielsweise durch einen Ring erfolgen, an dem die einzelnen Zahnelemente angeformt sind, wobei der Ring und die einzelnen Zahnelemente beispielsweise aus Weicheisen oder aus Trafoblech hergestellt sein können.

Gemäß einem weiteren Ausführungsbeispiel der Erfindung wird eine Drehkolbenmaschine, die als Pumpe, Verdichter, Motor oder Generator arbeitet, mit einem ersten Rotor und einem zweiten Rotor bereitgestellt, wobei der erste Rotor dem zweiten Rotor gegenüberliegend angeordnet ist. Der erste Rotor weist eine erste Stirnfläche mit einer ersten Verzahnung auf. Der zweite Rotor weist eine zweite Stirnfläche mit einer zweiten Verzahnung auf. Die erste und die zweite Verzahnung sind je aus zumindest einem Zahn gebildet. Die Verzahnungen stehen miteinander derart in Eingriff, dass durch Kämmen der Zähne der ersten Verzahnung und der Zähne der zweiten Verzahnung Arbeitsräume ausgebildet werden, wobei durch die Arbeitsräume gebildete Volumina durch das Kämmen der Zähne verändert werden. Die Rotoren sind von einem Gehäuse mit einer Innenwandung aufgenommen, wobei die Innenwandung weitgehend einer Außenkontur der Rotoren nachgebildet ist. Der erste Rotor weist eine erste Drehachse auf. Der zweite Rotor weist eine zweite Drehachse auf. Die erste und die zweite Drehachse schließen einen Winkel ein, der ungleich 0° ist. Wenigstens ein erster Magnet mit permanentem Magnetfeld erstreckt sich in Richtung einer ersten Erstreckungsachse, wobei der wenigstens eine erste Magnet ein als Südpol ausgebildetes erstes Ende und ein als Nordpol ausgebildetes dem ersten Ende gegenüberliegendes zweites Ende aufweist. Der wenigstens eine erste Magnet ist in dem ersten und/oder dem zweiten Rotor derart angeordnet, dass die erste Erstreckungsachse im Wesentlichen parallel zu der jeweiligen Drehachse angeordnet ist. Das Gehäuse weist wenigstens eine elektrisch steuerbare Spule auf, wobei die wenigstens eine Spule der ersten und/oder der zweiten Stirnfläche gegenüberliegend angeordnet ist. Die wenigstens eine Spule ist fest mit dem Gehäuse verbunden. Im Betrieb wirkt die wenigstens eine elektrisch steuerbare Spule derart mit dem wenigstens einen ersten Magnet zusammen, dass sich der Rotor dreht.

Somit befindet sich wenigstens eine elektrisch steuerbare Spule nicht bezüglich den Drehachsen im Wesentlichen in radialer Richtung an dem Gehäuse, sondern in axialer Richtung. Somit kann das Gehäuse in radialer Richtung schmäler gehalten werden, als wenn an dieser Stelle Spulen angebracht wären. Auch hier sind die Spulen derart mit dem Gehäuse verbunden, dass die Spulen keine Berührung mit dem durch die Rotoren verdrängten oder verdichteten Fluid haben. Weiterhin bedeutet die feste Verbindung mit dem Gehäuse, dass die Spulen zumindest quer zur Richtung der jeweiligen Drehachse, also in rotatorischer Richtung, fest mit oder an dem Gehäuse verbunden sind. In der Regel wird die wenigstens eine Spule auch in translatorischer Richtung, also in Richtung der jeweiligen Drehachse, fest mit oder an dem Gehäuse verbunden sein. Auch hier wird eine besonders kompakte Ausgestaltung einer Drehkolbenmaschine bereitgestellt. Weiterhin ist es nicht notwendig, dass Elemente der Rotoren zum Antrieb aus dem Gehäuse herausgeführt werden müssten. Natürlich können die Magneten auch in den jeweiligen Rotor derart eingebettet sein, dass die Magnete entweder teilweise oder vollständig von dem Rotorenwerkstoff bedeckt sind.

Gemäß einem weiteren Ausführungsbeispiel der Erfindung erstreckt sich wenigstens ein zweiter Magnet mit permanentem Magnetfeld in Richtung einer zweiten Erstreckungsachse. Der zweite Magnet weist ein als Südpol ausgebildetes erstes Ende und ein als Nordpol ausgebildetes dem ersten Ende gegenüberliegendes zweites Ende auf, wobei der erste und der zweite Magnet gemeinsam in dem ersten und/oder dem zweiten Rotor derart eingebettet sind, dass das erste Ende des ersten Magneten und das zweite Ende des zweiten Magneten benachbart sind. Der wenigstens eine erste und der wenigstens eine zweite Magnet bilden zusammen einen ersten Hohlzylinder mit im Wesentlichen kreiszylindrischem Querschnitt aus. Die Erstreckungsachsen sind im Wesentlichen parallel zu der jeweiligen Drehachse angeordnet.

Im einfachsten Fall kann es sich hierbei um einen ersten Hohlzylinder handeln, der an seinem einen Ende sowohl einen Nordpol als auch einen Südpol aufweist. Jedoch kann der Hohlzylinder auch aus mehreren ersten und mehreren zweiten Magneten gebildet werden, so dass sich an dem einen Ende des Hohlzylinders mehrere alternierend zueinander angeordnete Nord- und Südpole ergeben. Natürlich ist die Anzahl der an diesem Ende vorhandenen Nord- und Südpole gleich. In anderen Worten ausgedrückt kann der Hohlzylinder dadurch erzeugt werden, dass beispielsweise eine gerade Anzahl von Stabmagneten kreisförmig aneinander gereiht werden.

Gemäß einem weiteren Ausgestaltungsbeispiel der Erfindung erstreckt sich wenigstens ein dritter Magnet mit permanentem Magnetfeld in Richtung einer dritten Erstreckungsachse, wobei der dritte Magnet ein als Südpol ausgebildetes drittes Ende und ein als Nordpol ausgebildetes dem dritten Ende gegenüberliegendes viertes Ende aufweist. Wenigstens ein vierter Magnet des permanenten Magnetfelds erstreckt sich in Richtung einer vierten Erstreckungsachse, wobei der vierte Magnet ein als Südpol ausgebildetes drittes Ende und ein als Nordpol ausgebildetes dem dritten Ende gegenüberliegendes viertes Ende aufweist. Der dritte und der vierte Magnet sind gemeinsam in dem ersten und/oder dem zweiten Rotor derart angeordnet, dass das dritte Ende des dritten Magneten und das vierte Ende des vierten Magneten benachbart sind. Der wenigstens eine dritte und der wenigstens eine vierte Magnet bilden zusammen einen zweiten Hohlzylinder mit im Wesentlichen kreiszylindrischem Querschnitt aus. Die Erstreckungsachsen sind im Wesentlichen parallel zu der jeweiligen Drehachse angeordnet. Das erste und das vierte Ende, respektive das zweite und das dritte Ende sind benachbart.

Somit wird ein zweiter Hohlzylinder in der gleichen Art und Weise ausgebildet, wie dies bereits bei der Ausgestaltung des ersten Hohlzylinders beschrieben worden ist. In dem vorliegenden Ausführungsbeispiel ist eine Außenkontur des zweiten Hohlzylinders im Wesentlichen einer Innenkontur des ersten Hohlzylinders nachgebildet. Somit sind in einer quer zu einer dem ersten und dem zweiten Hohlzylindern gemeinsamen Mittelachse verlaufenden Ebene beispielsweise ein Nordpol des ersten Hohlzylinders von zwei Südpolen des ersten Hohlzylinders und einem Südpol des zweiten Hohlzylinders umgeben.

Gemäß einem weiteren Ausführungsbeispiel der Erfindung sind der erste und der zweite Hohlzylinder konzentrisch um die erste und/oder die zweite Drehachse angeordnet.

Durch die konzentrische Anordnung der beiden Hohlzylinder um die jeweilige Drehachse der Rotoren ergibt sich im Betrieb eine gleichmäßige Kraftverteilung über den Umfang des angetriebenen Rotors. Natürlich können sowohl der erste Rotor als auch der zweite Rotor angetrieben sein. Ferner ist es möglich, dass zwischen dem ersten und dem zweiten Rotor Zwischenrotoren angeordnet sind, die dann im Schleppbetrieb gedreht werden können.

Es wird angemerkt, dass die Gedanken zu der Erfindung hierin im Zusammenhang mit einer Drehkolbenmaschine in unterschiedlichen Ausgestaltungen beschrieben sind. Einem Fachmann ist hierbei klar, dass die einzelnen beschriebenen Merkmale auf verschiedene Weise miteinander kombiniert werden können, um so auch zu anderen Ausgestaltungen der Erfindung zu führen.

### Kurze Beschreibung der Zeichnungen

Ausführungsformen der Erfindung werden nachfolgend mit Bezug auf die beigefügten Figuren beschrieben. Die Figuren sind lediglich schematisch und nicht maßstabsgetreu.
- Figur 1: zeigt einen Querschnitt durch eine Drehkolbenmaschine mit einem ersten Rotor und einem zweiten Rotor, wobei die Rotoren auf mit dem Gehäuse fest verbunden Achsen drehbar geführt sind;
- Figur 2: zeigt einen Querschnitt der aus Figur 1 bekannten Drehkolbenmaschine mit in dem ersten Rotor eingebetteten Magneten und mit dem Gehäuse bezüglich einer Rotordrehachse in radialer Richtung fest verbundenen elektrisch steuerbaren Spulen;
- Figur 3: zeigt eine bezüglich einer Rotordrehachse radial angeordnete Permanentmagnet-Spulen-Anordnung in einer 3-D-Ansicht;
- Figur 4: zeigt eine erster Rotor-zweiter Rotor-Anordnung der Drehkolbenmaschine mit in dem ersten Rotor eingebetteten, bereits aus Figur 3 bekannten Permanentmagneten in einer 3-D-Ansicht;
- Figur 5: zeigt die bereits aus Figur 4 bekannte erster Rotor-zweiter Rotor-Anordnung mit einer Spulenanordnung gemäß Figur 3 in einer 3-D-Ansicht;
- Figur 6: zeigt die aus Figur 5 bereits bekannte erster Rotor-zweiter Rotor-Anordnung mit der aus Figur 3 bekannten Spulenanordnung, die in einem Gehäuse integriert ist, in einer 3-D-Ansicht;
- Figur 7: zeigt eine erster Rotor-zweiter Rotor-Anordnung mit einer zu einer Stirnfläche eines Rotors gegenüberliegend angeordneten Spulenanordnung in einer 3-D-Ansicht;
- Figur 8: zeigt eine erster Rotor-zweiter Rotor-Anordnung mit einer Permanentmagnetanordnung in dem zweiten Rotor, die bezüglich einer Drehachse des zweiten Rotors als zwei zueinander konzentrische Hohlzylinder mit einem im Wesentlichen kreisförmigen Querschnitt ausgebildet sind, in einer 3-D-Ansicht; und
- Figur 9: zeigt die aus der Figur 7 bekannte erster Rotor-zweiter Rotor-Anordnung in einem Gehäuse integriert in einer 3-D-Ansicht.

### Detaillierte Beschreibung beispielhafter Ausführungsformen

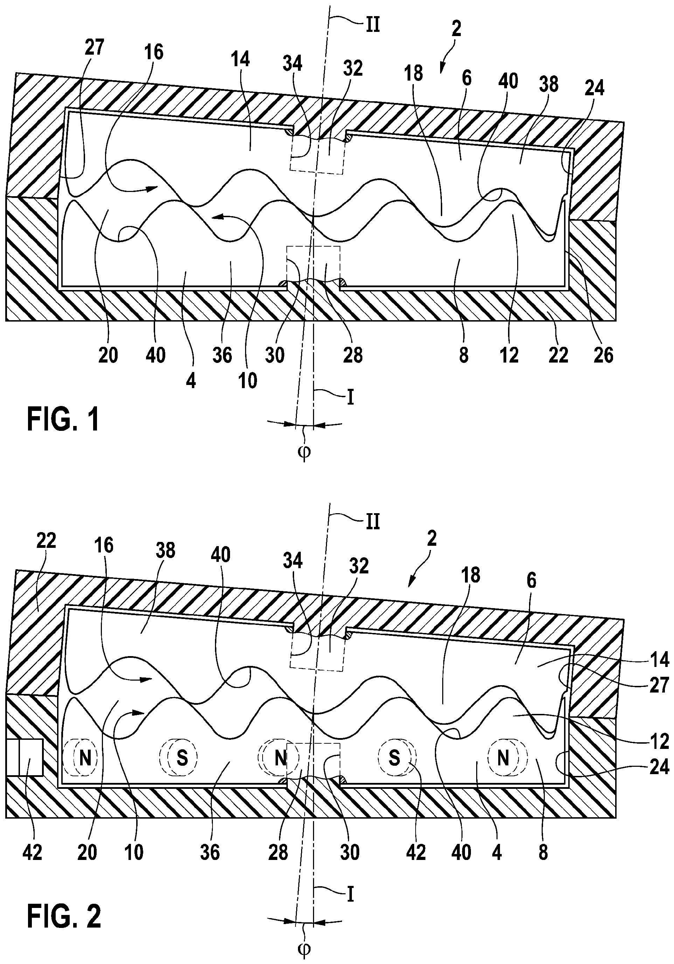

Figur 1 zeigt eine Drehkolbenmaschine 2, die als Pumpe, Verdichter oder Motor arbeitet mit einem ersten Rotor 4 und einem dem ersten Rotor 4 gegenüberliegenden zweiten Rotor 6. Der erste Rotor 4 besitzt eine erste Stirnfläche 8 mit einer zumindest aus einem ersten Zahn 12 gebildete erste Verzahnung 10. Der zweite Rotor 6 besitzt an seiner zweiten Stirnfläche 14 eine aus wenigstens einem zweiten Zahn 18 gebildete zweite Verzahnung 16. Die Verzahnungen 10, 16 stehen miteinander derart in Eingriff, dass durch Kämmen der ersten Zähne 12 der ersten Verzahnung 10 und der zweiten Zähne 18 der zweiten Verzahnung 16 Arbeitsräume 20 ausgebildet werden. Hierbei werden durch die Arbeitsräume 20 gebildete Volumina durch das Kämmen der Zähne 12, 18 verändert. Die Rotoren 4, 6 sind in einem Gehäuse 22 aufgenommen. Das Gehäuse 22 besitzt eine Innenwandung 24, wobei die Innenwandung 24 weitgehend einer Außenkontur 26 der Rotoren 4, 6 nachgebildet ist. Diese Innenwandung 24 besitzt einen im Wesentlichen als Hohlkugelabschnitt ausgebildeten Innenwandungsabschnitt 27, welcher die Arbeitsräume 20 zum Gehäuse 22 nach außen hin abdichtet. Der erste Rotor 4 besitzt eine erste Drehachse I und der zweite Rotor 6 eine zweite Drehachse II. Die erste Drehachse I und die zweite Drehachse II schließen einen ersten Winkel ϕ ein, der ungleich 0° ist. Ein erstes Achselement 28, welches als gerader Kreiszylinder ausgebildet ist, ist an dem Gehäuse 22, respektive an dessen Innenwandung 24 in translatorischer und rotatorischer Richtung fest verbunden. Das erste Achselement 28 erstreckt sich entlang einer ersten Mittelachse, wobei die erste Mittelachse mit der ersten Drehachse I zusammenfällt. Das erste Achselement 28 ragt in eine erste Öffnung 30 des ersten Rotors 4, wobei die erste Öffnung 30 komplementär zu dem ersten Achselement 28 ausgebildet ist. Das erste Achselement 28 und die erste Öffnung 30 wirken derart zusammen, dass der erste Rotor 4 um das erste Achselement 28 drehbar in dem Gehäuse 22 geführt ist. Weiterhin ist an dem Gehäuse 22, respektive dessen Innenwandung 24 ein zweites Achselement 32 in rotatorischer und translatorischer Richtung fest verbunden. Das zweite Achselement 32 erstreckt sich entlang einer zweiten Mittelachse, wobei die zweite Mittelachse mit zweiter Drehachse 2 zusammenfällt. Das zweite Achselement 32 ragt in eine zweite Öffnung 34 des zweiten Rotors 6, wobei die zweite Öffnung 34 komplementär zu dem zweiten Achselement 32 ausgebildet ist. Das zweite Achselement 32 und die zweite Öffnung 34 wirken derart zusammen, dass der zweite Rotor 6 um das zweite Achselement 32 drehbar in dem Gehäuse 22 geführt ist. Sowohl die erste 30 als auch die zweite Öffnung 34 sind derart in dem jeweiligen Rotor 4, 6 angeordnet, dass die beiden Öffnungen 30, 34 keine Verbindung zu den Arbeitsräumen 20 aufweisen.

In dem vorliegenden Ausführungsbeispiel sind das erste 28 und das zweite Achselement 32 einstückig mit dem aus Kunststoff gefertigten Gehäuse 22 ausgebildet. Natürlich können das erste 28 und/oder das zweite Achselement 32 aus einem von dem Gehäuse 22 verschiedenen Material wie beispielsweise Stahl ausgeführt sein.

Weiterhin sind mit der ersten Stirnfläche 8 des ersten Rotors 4 ein erstes Stützelement 36 und mit der zweiten Stirnfläche 14 des zweiten Rotors 6 ein zweites Stützelement 38 vollflächig verbunden. In der Regel werden das erste 36 und das zweite Stützelement 38 mit dem jeweiligen Rotor 4, 6 einstückig ausgeformt. Weiterhin schließen sich in radialer Richtung gesehen die Stützelemente 36, 38 absatzlos an die Verzahnungen 10, 16 an. In axialer Richtung gesehen sind das erste 36 und das zweite Stützelement 38 in der Regel an einer der Stirnfläche 8, 14 gegenüberliegenden Seite plan ausgeführt. Somit sind das erste 36 und das zweite Stützelement 38 in der Regel als Scheibe ausgeführt. Diese Stützelemente 36, 38 haben die Aufgabe, die auf die Verzahnungen 10, 16 während des Verdrängens und/oder Verdichtens des entsprechenden Fluids wirkenden Kräfte aufzunehmen. Insbesondere im Bereich von Zahngründen 40 der ersten 10, respektive der zweiten Verzahnung 16, ist eine entsprechende Dicke des jeweiligen Stützelements 36, 38 erforderlich, um ein Ausweichen der Zahngründe 40 bei einer entsprechenden Krafteinwirkung zu vermeiden. Ein Ausweichen der Zahngründe 40 in axialer Richtung würde den Wirkungsgrad der Drehkolbenmaschine 2 reduzieren.

Figur 2 zeigt die aus Figur 1 bekannte Drehkolbenmaschine 2, wobei in dem ersten Stützelement 36 des ersten Rotors 4 nicht sichtbare stabförmig ausgestaltete Magnete eingebettet sind. Von den Magneten sind lediglich ihre Pole, nämlich Nordpol N und Südpol S, in dem ersten Stützelement 36 dargestellt. Weiterhin sind mit dem Gehäuse 22 Spulen 42 fest verbunden. Die Spulen 42 sind hierbei in Verlängerung der in dem ersten Stützelement 36 eingebetteten Magneten radial bezüglich der ersten Drehachse I ringförmig um das Gehäuse 22 angeordnet. Die Spulen 42 sind derart elektrisch steuerbar, dass bei einer entsprechenden Bestromung dieser Spulen 42 der erste Rotor 4 bezüglich seiner ersten Drehachse I rotiert. Durch den Eingriff der ersten Verzahnung 10 in die zweite Verzahnung 16 des zweiten Rotors 6 wird der zweite Rotor 6 durch den ersten Rotor 4 mitgeschleppt. Natürlich könnten auch Magnete in das zweite Stützelement 38 integriert werden und mittels weiterer elektrisch steuerbarer Spulen 42 derart anzutreiben, dass sowohl der erste Rotor 4 als auch der zweite Rotor 6 angetrieben sind. Somit kann die hier beschriebene Drehkolbenmaschine zusätzlich auch als Generator betrieben werden.

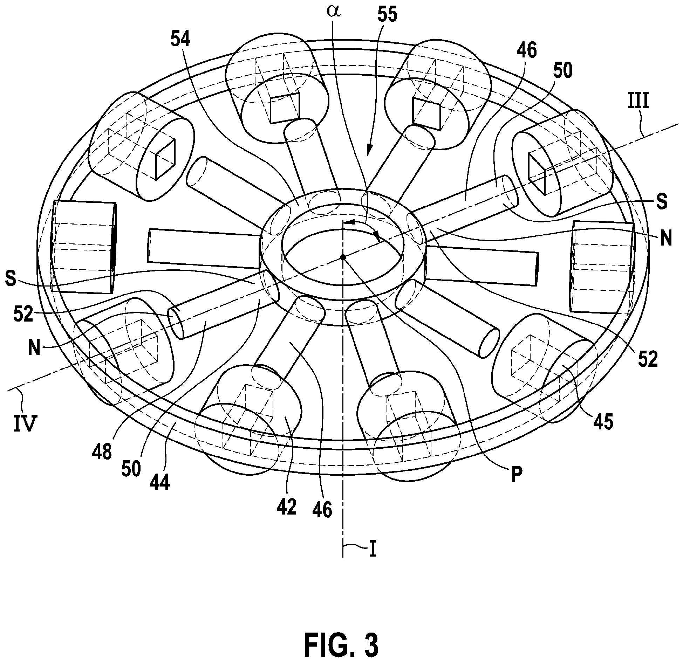

Anhand der Figur 3 wird die in Figur 2 bereits kurz skizzierte Magnet-Spulen-Anordnung beschrieben. Die in Figur 2 beschriebenen Spulen 42 sind auf einem zu der Drehachse I weisenden Zahnelement 45 aufgenommen. Dieses Zahnelement 45 ist durch die Spule 42 magnetisierbar und besteht in der Regel aus einzelnen Schichten, die aus magnetisierbarem Weicheisen gefertigt sind. Hierbei weisen alle Zahnelemente 45 in Richtung der Drehachse I. Eine Permanentmagnet-Anordnung 55 besteht aus vier Magnetpaaren mit je einem ersten 46 und einem zweiten Magnet 48 sowie einem Rückschlusskern 54. Der Rückschlusskern 54 ist konzentrisch zu der ersten Drehachse I als Ring ausgebildet. Mit dem Rückschlusskern 54 fest verbunden sind die vier Magnetpaare. Der erste 46 und der zweite Magnet 48 sind als Stabmagnet ausgebildet. Der Stabmagnet 46, 48 bildet in dem hier dargestellten Ausgestaltungsbeispiel einen geraden Zylinder mit kreisförmigem Querschnitt, kann aber ebenso mit quadratischen, rechteckigen oder einer sonstigen Querschnittsform gefertigt sein. Alle Magnete 46, 48 sind als Permanentmagnete ausgebildet. Der erste Magnet 46 erstreckt sich entlang einer ersten Erstreckungsachse III und der zweite Magnet 48 entlang einer zweiten Erstreckungsachse IV. Die erste Erstreckungsachse III, die zweite Erstreckungsachse IV und die erste Drehachse I schneiden sich in einem Punkt P. In der hier gezeigten Ausführungsform fluchten die erste Erstreckungsachse III und die zweite Erstreckungsachse IV. Weiterhin liegen die vier Magnetpaare in einer Ebene, wobei die Ebene senkrecht zu der ersten Drehachse I angeordnet ist.

Insbesondere, wenn die einzelnen Magnete 46, 48 in den Zähnen einer Verzahnung eingebettet sind, kann ein zwischen der ersten III, respektive der zweiten Erstreckungsachse IV, und der ersten Drehachse I eingeschlossener zweiter Winkel α ungleich 90° sein. In einem derartigen Ausgestaltungsbeispiel würden die ersten 46 und zweiten Magneten 48 bezüglich der ersten Drehachse I eine kegelige Anordnung einnehmen.

Der erste Magnet 46 besitzt ein der Spule 42 zugewandtes erstes Ende 50, welches als Südpol S ausgebildet ist. Dem ersten Ende 50 gegenüberliegend besitzt der erste Magnet 46 ein zweites Ende 52, welches als ein Nordpol N ausgebildet ist. In dem vorliegenden Ausführungsbeispiel ist das zweite Ende 52 fest mit dem Rückschlusskern 54 magnetisch leitend verbunden. Dem ersten Magnet 46 gegenüberliegend befindet sich der zweite Magnet 48, wobei der zweite Magnet 48 dem ersten Magnet 46 gleicht. Der zweite Magnet 48 besitzt ein als Nordpol N ausgebildetes zweites Ende 52, welches zur Spule 42 weist und ein dem zweiten Ende 52 gegenüberliegendes erstes Ende 50, welches als ein Südpol S ausgebildet ist. Hierbei ist das erste Ende 50 mit dem Rückschlusskern 54 magnetisch leitend verbunden. Die hier geschilderte Anordnung ist auch für die weiteren Magnetpaare gültig, wobei die Magnetpaare derart angeordnet sind, dass ein als Nordpol N ausgebildetes zweites Ende 52 und ein als Südpol S ausgebildeten ersten Ende 50 benachbart sind. Somit sind die einzelnen Magnetpaare, bestehend aus dem ersten 46 und dem zweiten Magnet 48, immer in gerader Anzahl vorhanden. Durch eine Bestromung der einzelnen elektrisch steuerbaren Spulen 42 wird die Permanentmagnet-Anordnung 55 um die erste Drehachse I in Drehung versetzt.

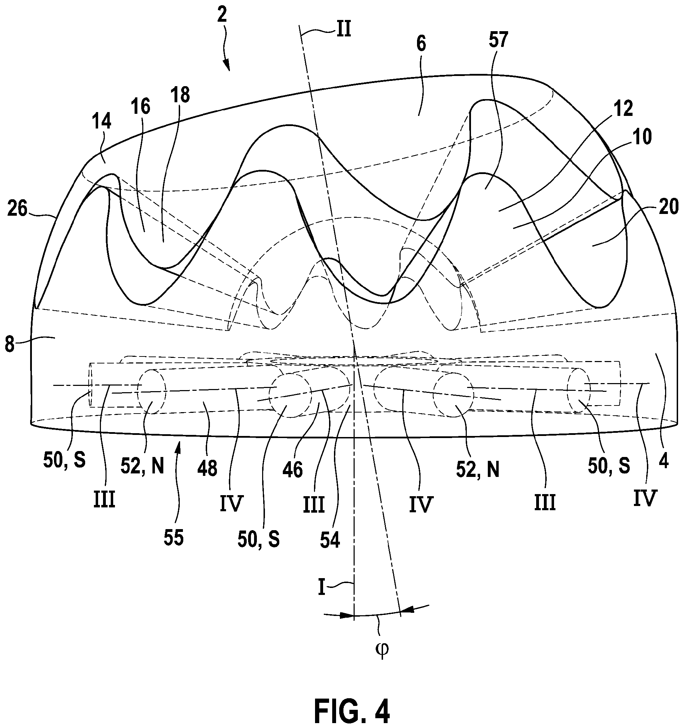

Figur 4 zeigt die in Figur 3 beschriebene Permanentmagnet-Anordnung 55 eingebettet in das erste Stützelement 36 des ersten Rotors 4. Weiterhin ist in der Figur 4 auch der mit dem ersten Rotor 4 in Eingriff stehende zweite Rotor 6 dargestellt, der seinerseits um die zweite Drehachse II drehbar ist. Deutlich sichtbar ist, dass ein Zahnkopf 57 des ersten Zahns 12 von dem hier nicht dargestellten Gehäuse zur ersten Drehachse I hin in Richtung zur ersten Stirnfläche 8 abfällt. Gut vorstellbar ist, dass die Permanentmagnet-Anordnung 55 in den einzelnen Zähnen 12 der ersten Verzahnung 10 eingebettet sein könnte, wie dies in der Beschreibung der Figur 3 bereits angedeutet wurde. Damit würde der erste Magnet 46 in einem ersten Zahn 12 und der zweite Magnet 48 in einem gegenüberliegenden weiteren ersten Zahn 12 eingebettet sein. Somit würde die Verzahnung 10 aus wenigstens zwei ersten Zähnen 12 gebildet. Wenn die Magnete 46, 48 in den ersten Zähnen eingebettet wären, wäre die Anzahl der ersten Zähne 12 des ersten Rotors 4 stets eine gerade Zahl. Wenn weiterhin die einzelnen Magnete 46, 48 derart in ersten Zähnen 12 eingebettet wären, dass deren Erstreckungsachsen III, IV weitgehend der Ausformung des Zahnkopfes 57 folgen würden, so würden die Erstreckungsachsen III, IV einen zweiten Winkel α gegenüber der ersten Drehachse I einnehmen, der kleiner als 90° ist.

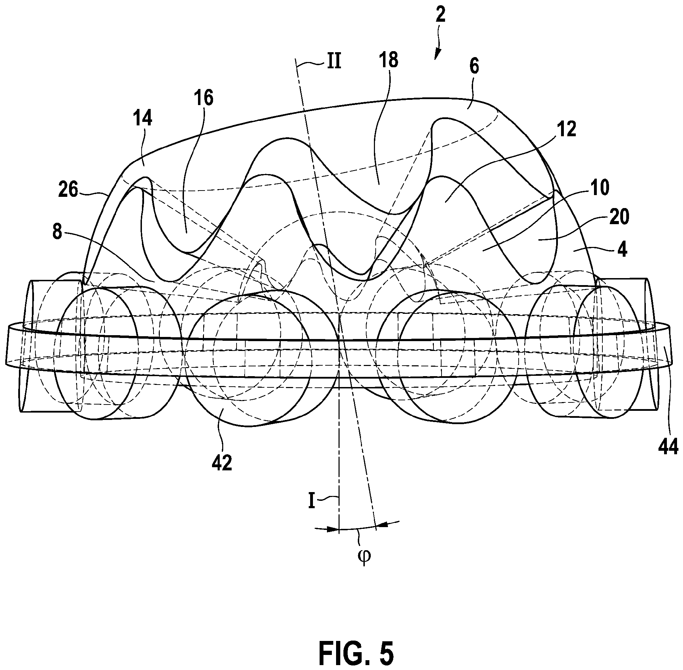

Figur 5 zeigt die in Figur 4 dargestellte Anordnung, wobei zusätzlich die bereits aus Figur 3 bekannte Anordnung der Spulen 42 in Verbindung mit dem Ring 44 ergänzt ist.

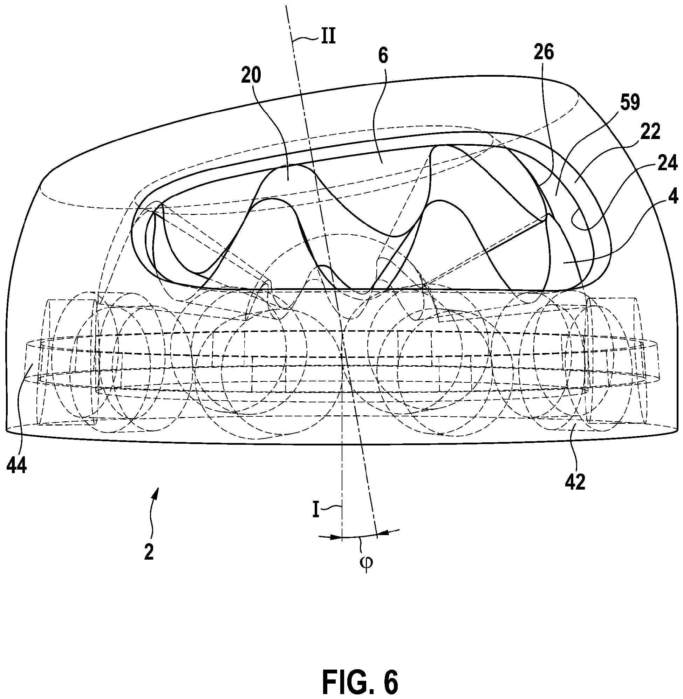

Figur 6 zeigt die aus Figur 5 bekannte Anordnung, die nunmehr in dem Gehäuse 22 integriert ist. Hierbei sind die Spulen 42 mit dem Gehäuse 22 in rotatorischer und translatorischer Richtung fest verbunden. Weiterhin besitzen die Spulen 42 keine Verbindung zu einem von der Innenwandung 24 des Gehäuses 22 begrenzten Innenraum 59. In der hier gezeigten Ausführungsform besitzen die Rotoren 4, 6 keine den Innenraum 59 verlassende Achsen, die mittels entsprechender Antriebseinheiten, beispielsweise Elektromotoren, verbunden sind. Vielmehr kann der Innenraum 59 gegenüber einer Umgebung bezüglich des zu verdrängenden und/oder verdichtenden Fluids hermetisch gedichtet sein, wobei die Rotoren 4, 6 trotzdem angetrieben werden können. Natürlich kann der Rotor 4, in dem die Magnete 46, 48 eingebettet sind, derart gestaltet sein, dass der Rotor 4 aus einem Kunststoff hergestellt ist, welcher magnetisierbar ist, nachdem der Rotor 4 seine endgültige Form erhalten hat.

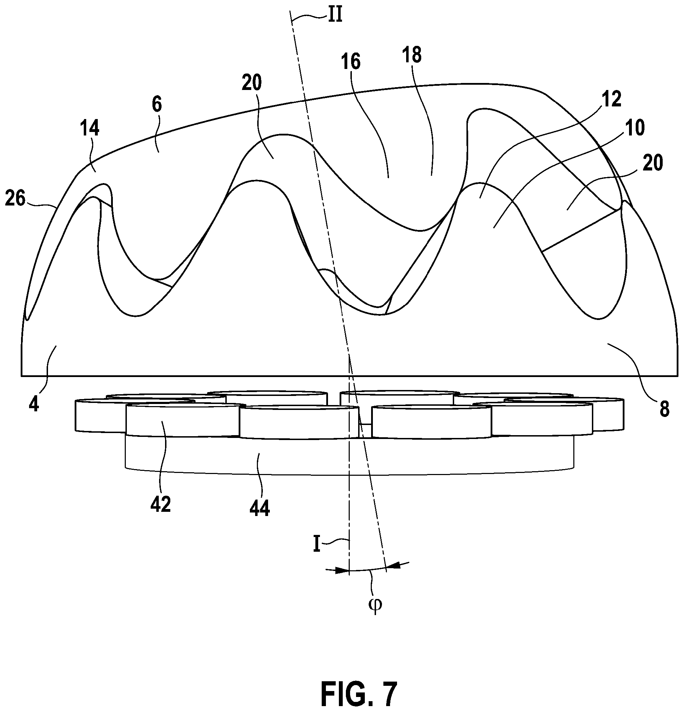

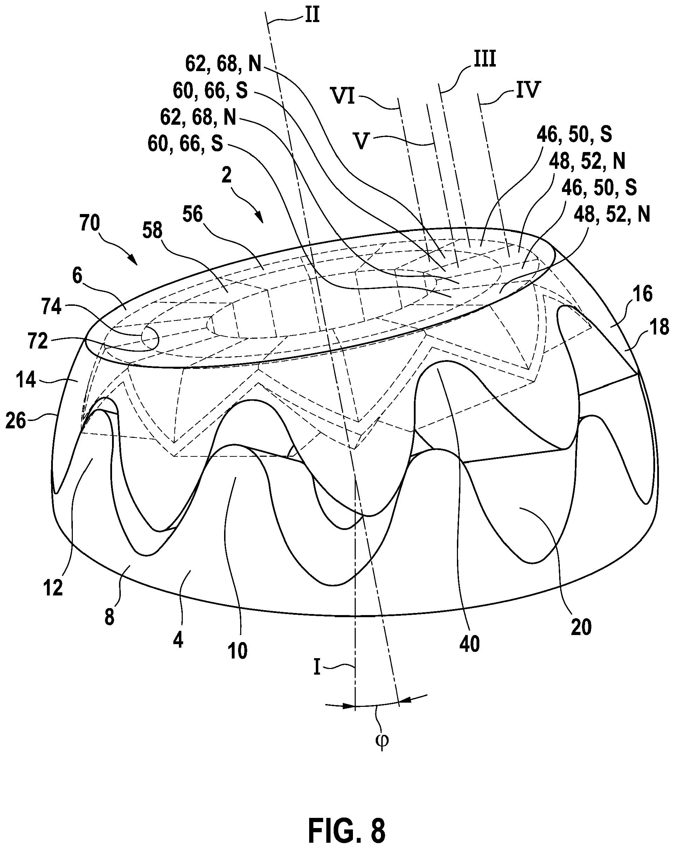

Figur 7 zeigt eine Anordnung mit einem ersten Rotor 4 und einem zweiten Rotor 6, wobei im Gegensatz zu den bisherigen Figuren die Spulen 42 der ersten Stirnfläche 8 gegenüberliegend angeordnet ist. Auch hier sind die einzelnen Zahnelemente 45 der Spulen 42 mittels des Rings 44 miteinander verbunden, wobei der Ring 44 gegenüberliegend der ersten Stirnfläche 8 angeordnet ist und die Zahnelemente 45 zu der Stirnfläche 8 hinweisen. Die Spulen 42 sind somit im Gegensatz zur bisher bekannten radialen Anordnung axial angeordnet. Eine derartige Spulen 42-Anordnung bewirkt, dass ein die Rotoren 4, 6 umgebendes Gehäuse 22 im Durchmesser kleiner gebaut werden kann, als wenn radial die Spulen 42 angeordnet wären. Um den Rotor 4 antreiben zu können, ist in dem Rotor 4 mindestens ein Permanentmagnet integriert oder eingebettet. Wenn der Magnet als ein stabförmiger Permanentmagnet ausgebildet ist, verläuft dessen Längserstreckungsachse parallel zu der ersten Drehachse I. Somit kann der Permanentmagnet derart in dem Rotor 4 angeordnet sein, dass beispielsweise sein erstes als Südpol S ausgebildetes Ende der Spule 42 zugewandt ist, während dessen zweites als Nordpol N ausgebildetes Ende von der Spule 42 weg weist. Die hier kurz beschriebene Permanentmagnet-Anordnung soll nun ausführlich in Figur 8 beschrieben werden.

Figur 8 zeigt eine weitere Permanentmagnet-Anordnung 70, die aus Übersichtlichkeitsgründen in dem zweiten Rotor 6 dargestellt ist. Hierbei sind erste Magnete 46 und zweite Magnete 48 alternierend benachbart aneinander gereiht, so dass sich ein erster Hohlzylinder 56 mit im Wesentlichen kreisringförmigem Querschnitt ergibt. Somit ist ein als Südpol S ausgebildetes erstes Ende 50 des ersten Magneten 46 und ein als Nordpol N ausgebildetes zweites Ende 52 des zweiten Magneten 48 benachbart. Zu dem ersten Hohlzylinder 56 ist konzentrisch ein zweiter Hohlzylinder 58 angeordnet, wobei der zweite Hohlzylinder 58 einen ebenfalls im Wesentlichen kreisförmigen Querschnitt besitzt. Der erste 56 und der zweite Hohlzylinder 58 sind derart angeordnet, dass eine Innenwandung 72 des ersten Hohlzylinders 56 mit einer Außenwandung 74 des zweiten Hohlzylinders 58 benachbart ist. In der Regel wird sich die Innenwandung 72 und die Außenwandung 74 berühren. Der zweite Hohlzylinder 58 besteht aus dritten Magneten 60 und vierten Magneten 62. Die Anzahl der ersten Magneten 46, der zweiten Magneten 48, der dritten Magneten 60 und der vierten Magneten 62 ist gleich. Der dritte 60 und der vierte Magnet 62 sind ebenfalls stabförmig ausgebildet, wobei sich der dritte Magnet 60 entlang einer dritten Erstreckungsachse V und der vierte Magnet 62 entlang einer vierten Erstreckungsachse VI erstrecken. Hierbei verlaufen die erste Erstreckungsachse III des ersten Magneten 46, die zweite Erstreckungsachse IV des zweiten Magneten 48, die dritte Erstreckungsachse V des dritten Magneten 60 und die vierte Erstreckungsachse VI des vierten Magneten 62 zueinander parallel. Der dritte 60 und der vierte Magnet 62 besitzen jeweils ein als Südpol S ausgebildetes drittes Ende 66 und ein dem dritten Ende 66 gegenüberliegendes als Nordpol N ausgebildetes viertes Ende 68. Der zweite Hohlzylinder 58 ist ausgebildet, indem dritte 60 und vierte Magnete 62 alternierend benachbart angeordnet sind. Somit ist das als Südpol S ausgebildete dritte Ende 66 des dritten Magneten 60 benachbart zu dem als Nordpol N ausgebildeten vierten Ende 68 des vierten Magneten 62. Weiterhin sind der erste 56 und der zweite Hohlzylinder 58 zueinander derart ausgerichtet, dass beispielsweise einem als Südpol S ausgebildeten ersten Ende 50 des ersten Magneten 46 des ersten Hohlzylinders 56 das vierte Ende 68 des vierten Magneten 62, welches als Nordpol N ausgebildet ist, benachbart ist. Die beiden Hohlzylinder 56, 58 sind konzentrisch zu der zweiten Drehachse II des zweiten Rotors 8 angeordnet. Diese weitere Permanentmagnet-Anordnung 70 lässt sich auch erzeugen, wenn der entsprechende Rotor 6, 8 aus einem Kunststoff gefertigt ist, der nach der Herstellung der Rotoren magnetisierbar ist.

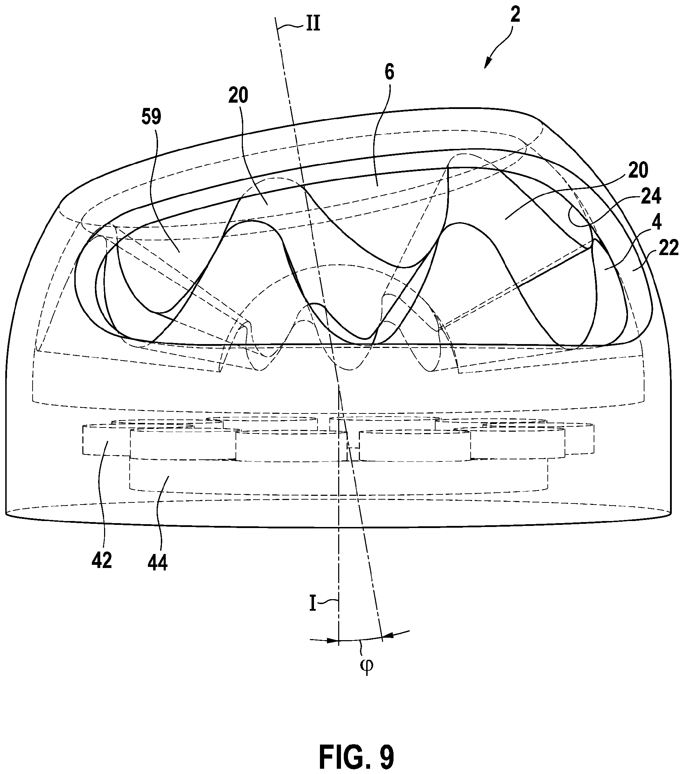

Figur 9 zeigt die aus Figur 7 bekannte Anordnung, bestehend aus dem ersten Rotor 4, dem zweiten Rotor 6 sowie der Spule 42 in Verbindung mit dem Ring 44 in dem Gehäuse 22 integriert. Hierbei ist die in Figur 8 beschriebene weitere Permanentmagnet-Anordnung 70 in dem ersten Rotor 4 eingebettet. Durch ein Bestromen der elektrisch steuerbaren Spulen 42 wird der erste Rotor 4 angetrieben und schleppt den zweiten Rotor 6 mit. Auch hier entsteht eine besonders kompakte Ausführungsform der Drehkolbenmaschine 2, wobei der durch die Innenwandung 24 des Gehäuses 22 begrenzte Innenraum 59 gegenüber einer Umgebung in Verbindung mit dem zu befördernden oder verdichtenden Fluid hermetisch abgeschlossen ausgebildet sein kann.

## Patentansprüche

1. Drehkolbenmaschine, die als Pumpe, Verdichter, Motor oder Generator arbeitet,
- mit einem ersten Rotor (4) und einem zweiten Rotor (6), wobei der erste Rotor (4) dem zweiten Rotor (6) gegenüberliegend angeordnet ist,
- wobei der erste Rotor (4) eine erste Stirnfläche (8) mit einer ersten Verzahnung (10) aufweist, wobei der zweite Rotor (6) eine zweite Stirnfläche (14) mit einer zweiten Verzahnung (16) aufweist und wobei die erste (10) und die zweite Verzahnung (16) je aus zumindest einem Zahn (12, 18) gebildet sind,
- wobei die Verzahnungen (10, 16) miteinander derart in Eingriff stehen, dass durch Kämmen der Zähne (12) der ersten Verzahnung (10) und der Zähne (18) der zweiten Verzahnung (16) Arbeitsräume (20) ausgebildet werden, wobei durch die Arbeitsräume (20) gebildete Volumina durch das Kämmen der Zähne (12, 18) verändert werden,
- wobei die Rotoren (4, 6) von einem Gehäuse (22) mit einer Innenwandung (24) aufgenommen sind, wobei die Innenwandung (24) weitgehend einer Außenkontur (26) der Rotoren (4, 6) nachgebildet ist,
- wobei der erste Rotor (4) eine erste Drehachse (I) aufweist, wobei der zweite Rotor (6) eine zweite Drehachse (II) aufweist, wobei die erste Drehachse (I) und die zweite Drehachse (II) einen Winkel (ϕ) einschließen, der ungleich 0° ist,
**dadurch gekennzeichnet, dass**
- wenigstens ein erster Magnet (46) mit permanentem Magnetfeld sich in Richtung einer ersten Erstreckungsachse (III) erstreckt, wobei der wenigstens eine erste Magnet (46) ein als Südpol (S) ausgebildetes erstes Ende (50) und ein als Nordpol (N) ausgebildetes dem ersten Ende (50) gegenüberliegendes zweites Ende (52) aufweist, wobei der wenigstens eine erste Magnet (46) an dem ersten (4) oder dem zweiten Rotor (6) angeordnet ist, wobei die erste Erstreckungsachse (III) eine Kreislinie mit einem Mittelpunkt und einem Durchmesser berührt, wobei die Kreislinie eine Kreisfläche begrenzt, wobei der Mittelpunkt auf der jeweiligen Drehachse (I, II) liegt, wobei die Kreisfläche im Wesentlichen senkrecht auf die jeweilige Drehachse (I, II) steht, wobei der Durchmesser größer als Null ist,
- das Gehäuse (22) wenigstens eine elektrisch steuerbare Spule (42) aufweist, die bezüglich der Drehachsen (I, II) im Wesentlichen radial angeordnet ist, wobei die wenigstens eine Spule (42) fest mit dem Gehäuse (22) verbunden ist,
- im Betrieb die wenigstens eine elektrisch steuerbare Spule (42) derart mit dem wenigstens einen ersten Magnet (46) zusammenwirkt, dass sich der Rotor (4, 6) dreht.

2. Drehkolbenmaschine nach Anspruch 1,
**dadurch gekennzeichnet, dass**
wenigstens ein zweiter Magnet (48) mit permanentem Magnetfeld sich in Richtung einer zweiten Erstreckungsachse (IV) erstreckt, wobei der wenigstens eine zweite Magnet (48) ein als Südpol (S) ausgebildetes erstes Ende (50) und ein als Nordpol (N) ausgebildetes dem ersten Ende (50) gegenüberliegendes zweites Ende (52) aufweist, wobei der wenigstens eine erste (46) und der wenigstens eine zweite Magnet (48) gemeinsam an dem ersten (4) oder dem zweiten Rotor (6) derart angeordnet sind, dass das erste Ende (50) des wenigstens einen ersten Magneten (46) diametral dem zweiten Ende (52) des wenigstens einen zweiten Magneten (48) gegenüberliegend angeordnet ist, wobei die zweite Erstreckungsachse (IV) die Kreislinie berührt.

3. Drehkolbenmaschine nach Anspruch 2, **dadurch gekennzeichnet, dass**
der wenigstens eine erste Magnet (46) und/oder der wenigstens eine zweite Magnet (48) in dem ersten (4) beziehungsweise dem zweiten Rotor (6) eingebettet sind.

4. Drehkolbenmaschine nach einem der Ansprüche 2 oder 3, **dadurch gekennzeichnet, dass**
der wenigstens eine erste Magnet (46) in dem wenigstens einen Zahn (12) der ersten Verzahnung (10) oder der wenigstens eine zweite Magnet (48) in dem wenigstens einen Zahn (18) der zweiten Verzahnung (16) eingebettet ist.

5. Drehkolbenmaschine nach einem der Ansprüche 2 bis 4,
**dadurch gekennzeichnet, dass**
das erste Ende (50) des wenigstens einen ersten Magneten (46) und das zweite Ende (52) des wenigstens einen zweiten Magneten (48) mittels eines Rückschlusskerns (54) verbunden sind, wobei der Rückschlusskern (54) als Ring ausgebildet ist, wobei der Ring in einem der Rotoren (4, 6) eingebettet ist.

6. Drehkolbenmaschine nach einem der Ansprüche 1 bis 5,
**dadurch gekennzeichnet, dass**
an der ersten Verzahnung (10) ein erstes Stützelement (36) und an der zweiten Verzahnung (16) ein zweites Stützelement (38) zur Aufnahme von an den Verzahnungen während des Verdrängens und/oder Verdichtens von Fluid auftretenden Kräften angeordnet ist, wobei der wenigstens eine Magnet (46, 48) in wenigstens einem der beiden Stützelemente (36, 38) eingebettet ist.

7. Drehkolbenmaschine nach einem der Ansprüche 1 bis 6,
**dadurch gekennzeichnet, dass**
der erste (4) und/oder der zweite Rotor (6) zumindest teilweise aus einem nach der Herstellung der Rotoren (4, 6) magnetisierbaren Kunststoff gefertigt sind.

8. Drehkolbenmaschine, die als Pumpe, Verdichter, Motor oder Generator arbeitet,
- mit einem ersten Rotor (4) und einem zweiten Rotor (6), wobei der erste Rotor (4) dem zweiten Rotor (6) gegenüberliegend angeordnet ist,
- wobei der erste Rotor (4) eine erste Stirnfläche (8) mit einer ersten Verzahnung (10) aufweist, wobei der zweite Rotor (6) eine zweite Stirnfläche (14) mit einer zweiten Verzahnung (16) aufweist und wobei die erste (10) und die zweite Verzahnung (16) je aus zumindest einem Zahn (12, 18) gebildet sind,
- wobei die Verzahnungen (10, 16) miteinander derart in Eingriff stehen, dass durch Kämmen der Zähne (12) der ersten Verzahnung (10) und der Zähne (18) der zweiten Verzahnung (16) Arbeitsräume (20) ausgebildet werden, wobei durch die Arbeitsräume (20) gebildete Volumina durch das Kämmen der Zähne (12, 18) verändert werden,
- wobei die Rotoren (4, 6) von einem Gehäuse (22) mit einer Innenwandung (24) aufgenommen sind, wobei die Innenwandung (24) weitgehend einer Außenkontur (26) der Rotoren (4, 6) nachgebildet ist,
- wobei der erste Rotor (4) eine erste Drehachse (I) aufweist, wobei der zweite Rotor (6) eine zweite Drehachse (II) aufweist, wobei die erste Drehachse (I) und die zweite Drehachse (II) einen Winkel (ϕ) einschließen, der ungleich 0° ist,
**dadurch gekennzeichnet, dass**
- wenigstens ein erster Magnet (46) mit permanentem Magnetfeld sich in Richtung einer ersten Erstreckungsachse (III) erstreckt, wobei der wenigstens eine erste Magnet (46) ein als Südpol (S) ausgebildetes erstes Ende (50) und ein als Nordpol (N) ausgebildetes dem ersten Ende (50) gegenüberliegendes zweites Ende (52) aufweist, wobei der wenigstens eine erste Magnet (46) in dem ersten (4) oder dem zweiten Rotor (6) derart angeordnet ist, dass die erste Erstreckungsachse (III) im Wesentlichen parallel zu der jeweiligen Drehachse (I, II) angeordnet ist,
- das Gehäuse (22) wenigstens eine elektrisch steuerbare Spule (42) aufweist, wobei die wenigstens eine Spule (42) der ersten (8) oder der zweiten Stirnfläche (14) gegenüberliegend angeordnet ist, wobei die wenigstens eine Spule (42) fest mit dem Gehäuse (22) verbunden ist,
- im Betrieb die wenigstens eine elektrisch steuerbare Spule (42) derart mit dem wenigstens einen ersten Magnet (46) zusammenwirkt, dass sich der Rotor (4, 6) dreht.

9. Drehkolbenmaschine nach Anspruch 8,
**dadurch gekennzeichnet, dass**
wenigstens ein zweiter Magnet (48) mit permanentem Magnetfeld sich in Richtung einer zweiten Erstreckungsachse (IV) erstreckt, wobei der zweite Magnet (48) ein als Südpol (S) ausgebildetes erstes Ende (50) und ein als Nordpol (N) ausgebildetes dem ersten Ende (50) gegenüberliegendes zweites Ende (52) aufweist, wobei der erste (46) und der zweite Magnet (48) gemeinsam in dem ersten (4) beziehungsweise dem zweiten Rotor (6) derart eingebettet sind, dass das erste Ende (50) des ersten Magneten (46) und das zweite Ende (52) des zweiten Magneten (48) benachbart sind, wobei der wenigstens eine erste (46) und der wenigstens eine zweite Magnet (48) zusammen einen geraden ersten Hohlzylinder (56) mit im Wesentlichen kreisringförmigen Querschnitt ausbilden, wobei die Erstreckungsachsen (III, IV) im Wesentlichen parallel zu der jeweiligen Drehachse (I, II) angeordnet sind.

10. Drehkolbenmaschine nach Anspruch 9,
**dadurch gekennzeichnet, dass**
wenigstens ein dritter Magnet (60) mit permanentem Magnetfeld sich in Richtung einer dritten Erstreckungsachse (V) erstreckt, wobei der dritte Magnet (60) ein als Südpol (S) ausgebildetes erstes Ende (66) und ein als Nordpol (N) ausgebildetes dem ersten Ende (66) gegenüberliegendes zweites Ende (68) aufweist, wobei wenigstens ein vierter Magnet (62) mit permanentem Magnetfeld sich in Richtung einer vierten Erstreckungsachse (VI) erstreckt, wobei der vierte Magnet (62) ein als Südpol (S) ausgebildetes erstes Ende (66) und ein als Nordpol (N) ausgebildetes dem ersten Ende (66) gegenüberliegendes zweites Ende (68) aufweist, wobei der dritte (60) und der vierte Magnet (62) gemeinsam in dem ersten (4) oder dem zweiten Rotor (6) derart angeordnet sind, dass das erste Ende (66) des dritten Magneten (60) und das zweite Ende (68) des vierten Magneten (62) benachbart sind, wobei der wenigstens eine dritte (60) und der wenigstens eine vierte Magnet (62) zusammen einen geraden zweiten Hohlzylinder (58) mit im Wesentlichen kreisringförmigen Querschnitt ausbilden, wobei die Erstreckungsachsen (V, VI) im Wesentlichen parallel zu der jeweiligen Drehachse (I, II) angeordnet sind, wobei das erste Ende (50) des ersten Magneten (46) und das zweite Ende (68) des vierten Magneten (62), respektive das zweite Ende (52) des zweiten Magneten (48) und das erste Ende (66) des dritten Magneten (60), benachbart sind.

11. Drehkolbenmaschine nach Anspruch 10,
**dadurch gekennzeichnet, dass**
der erste (56) und der zweite Hohlzylinder (58) konzentrisch um die erste (I) oder die zweite Drehachse (II) angeordnet sind.

12. Drehkolbenmaschine nach einem der Ansprüche 9 bis 11,
**dadurch gekennzeichnet, dass**
der erste (4) und/oder der zweite Rotor (6) aus einem nach der Herstellung der Rotoren (4, 6) magnetisierbaren Kunststoff gefertigt sind.

## Claims

1. Rotary piston machine which operates as a pump, compressor, motor or generator,
- comprising a first rotor (4) and a second rotor (6), wherein the first rotor (4) is arranged opposite the second rotor (6),
- wherein the first rotor (4) has a first end face (8) with a first tooth system (10), wherein the second rotor (6) has a second end face (14) with a second tooth system (16), and wherein the first tooth system (10) and the second tooth system (16) are each formed from at least one tooth (12, 18),
- wherein the tooth systems (10, 16) engage with one another in such a way that working spaces (20) are formed by way of the teeth (12) of the first tooth system (10) and the teeth (18) of the second tooth system (16) meshing, wherein volumes which are formed by the working spaces (20) are changed by way of the meshing of the teeth (12, 18),
- wherein the rotors (4, 6) are accommodated by a housing (22) with an inner wall (24), wherein the inner wall (24) is modelled largely on an outer contour (26) of the rotors (4, 6),
- wherein the first rotor (4) has a first rotation axis (I), wherein the second rotor (6) has a second rotation axis (II), wherein the first rotation axis (I) and the second rotation axis (II) enclose an angle (ϕ) which is not equal to 0°,
**characterized in that**
- at least one first magnet (46) with a permanent magnetic field extends in the direction of a first axis of extent (III), wherein the at least one first magnet (46) has a first end (50) which is designed as a south pole (S) and a second end (52) which is designed as a north pole (N) and is situated opposite the first end (50), wherein the at least one first magnet (46) is arranged on the first rotor (4) or the second rotor (6), wherein the first axis of extent (III) touches a circular line with a midpoint and a diameter, wherein the circular line delimits a circular surface area, wherein the midpoint is situated on the respective rotation axis (I, II), wherein the circular surface area is substantially perpendicular to the respective rotation axis (I, II), wherein the diameter is greater than zero,
- the housing (22) has at least one electrically controllable coil (42) which is arranged substantially radially with respect to the rotation axes (I, II), wherein the at least one coil (42) is fixedly connected to the housing (22),
- during operation the at least one electrically controllable coil (42) interacts with the at least one first magnet (46) in such a way that the rotor (4, 6) rotates.

2. Rotary piston machine according to Claim 1,
**characterized in that**
at least one second magnet (48) with a permanent magnetic field extends in the direction of a second axis of extent (IV), wherein the at least one second magnet (48) has a first end (50) which is designed as a south pole (S) and a second end (52) which is designed as a north pole (N) and is formed opposite the first end (50), wherein the at least one first magnet (46) and the at least one second magnet (48) are jointly arranged on the first rotor (4) or the second rotor (6) in such a way that the first end (50) of the at least one first magnet (46) is arranged diametrically opposite the second end (52) of the at least one second magnet (48), wherein the second axis of extent (IV) touches the circular line.

3. Rotary piston machine according to Claim 2,
**characterized in that**
the at least one first magnet (46) and/or the at least one second magnet (48) are embedded in the first rotor (4) or the second rotor (6).

4. Rotary piston machine according to either of Claims 2 and 3,
**characterized in that**
the at least one first magnet (46) is embedded in the at least one tooth (12) of the first tooth system (10) or the at least one second magnet (48) is embedded in the at least one tooth (18) of the second tooth system (16).

5. Rotary piston machine according to one of Claims 2 to 4,
**characterized in that**
the first end (50) of the at least one first magnet (46) and the second end (52) of the at least one second magnet (48) are connected by means of a magnetic return path core (54), wherein the magnetic return path core (54) is designed as a ring, wherein the ring is embedded in one of the rotors (4, 6).

6. Rotary piston machine according to one of Claims 1 to 5,
**characterized in that**
a first supporting element (36) is arranged on the first tooth system (10) and a second supporting element (38) is arranged on the second tooth system (16) for the purpose of absorbing forces which occur on the tooth systems during the displacement and/or compression of fluid, wherein the at least one magnet (46, 48) is embedded in at least one of the two supporting elements (36, 38).

7. Rotary piston machine according to one of Claims 1 to 6,
**characterized in that**
the first rotor (4) and/or the second rotor (6) are at least partially manufactured from a plastic which can be magnetized after the rotors (4, 6) are produced.

8. Rotary piston machine which operates as a pump, compressor, motor or generator,
- comprising a first rotor (4) and a second rotor (6), wherein the first rotor (4) is arranged opposite the second rotor (6),
- wherein the first rotor (4) has a first end face (8) with a first tooth system (10), wherein the second rotor (6) has a second end face (14) with a second tooth system (16), and wherein the first tooth system (10) and the second tooth system (16) are each formed from at least one tooth (12, 18),
- wherein the tooth systems (10, 16) engage with one another in such a way that working spaces (20) are formed by way of the teeth (12) of the first tooth system (10) and the teeth (18) of the second tooth system (16) meshing, wherein volumes which are formed by the working spaces (20) are changed by way of the meshing of the teeth (12, 18),
- wherein the rotors (4, 6) are accommodated by a housing (22) with an inner wall (24), wherein the inner wall (24) is modelled largely on an outer contour (26) of the rotors (4, 6),
- wherein the first rotor (4) has a first rotation axis (I), wherein the second rotor (6) has a second rotation axis (II), wherein the first rotation axis (I) and the second rotation axis (II) enclose an angle (ϕ) which is not equal to 0°,
**characterized in that**
- at least one first magnet (46) with a permanent magnetic field extends in the direction of a first axis of extent (III), wherein the at least one first magnet (46) has a first end (50) which is designed as a south pole (S) and a second end (52) which is designed as a north pole (N) and is situated opposite the first end (50), wherein the at least one first magnet (46) is arranged in the first rotor (4) or the second rotor (6) in such a way that the first axis of extent (III) is arranged substantially parallel in relation to the respective rotation axis (I, II),
- the housing (22) has at least one electrically controllable coil (42), wherein the at least one coil (42) is arranged opposite the first end face (8) or the second end face (14), wherein the at least one coil (42) is fixedly connected to the housing (22),
- during operation the at least one electrically controllable coil (42) interacts with the at least one first magnet (46) in such a way that the rotor (4, 6) rotates.

9. Rotary piston machine according to Claim 8,
**characterized in that**
at least one second magnet (48) with a permanent magnetic field extends in the direction of a second axis of extent (IV), wherein the second magnet (48) has a first end (50) which is designed as a south pole (S) and a second end (52) which is designed as a north pole (N) and is situated opposite the first end (50), wherein the first magnet (46) and the second magnet (48) are jointly embedded in the first rotor (4) or the second rotor (6) in such a way that the first end (50) of the first magnet (46) and the second end (52) of the second magnet (48) are adjacent, wherein the at least one first magnet (46) and the at least one second magnet (48) together form a straight first hollow cylinder (56) with a substantially circular ring-like cross section, wherein the axes of extent (III, IV) are arranged substantially parallel in relation to the respective rotation axis (I, II).

10. Rotary piston machine according to Claim 9,
**characterized in that**
at least one third magnet (60) with a permanent magnetic field extends in the direction of a third axis of extent (V), wherein the third magnet (60) has a first end (66) which is designed as a south pole (S) and a second end (68) which is designed as a north pole (N) and is situated opposite the first end (66), wherein at least one fourth magnet (62) with a permanent magnetic field extends in the direction of a fourth axis of extent (VI), wherein the fourth magnet (62) has a first end (66) which is designed as a south pole (S) and a second end (68) which is designed as a north pole (N) and is situated opposite the first end (66), wherein the third magnet (60) and the fourth magnet (62) are jointly arranged in the first rotor (4) or the second rotor (6) in such a way that the first end (66) of the third magnet (60) and the second end (68) of the fourth magnet (62) are adjacent, wherein the at least one third magnet (60) and the at least one fourth magnet (62) together form a straight second hollow cylinder (58) with a substantially circular ring-like cross section, wherein the axes of extent (V, VI) are arranged substantially parallel in relation to the respective rotation axis (I, II), wherein the first end (50) of the first magnet (46) and the second end (68) of the fourth magnet (62), and respectively the second end (52) of the second magnet (48) and the first and (66) of the third magnet (60), are adjacent.

11. Rotary piston machine according to Claim 10,
**characterized in that**
the first hollow cylinder (56) and the second hollow cylinder (58) are arranged concentrically around the first rotation axis (I) or the second rotation axis (II).

12. Rotary piston machine according to one of Claims 9 to 11,
**characterized in that**
the first rotor (4) and/or the second rotor (6) are manufactured from a plastic which can be magnetized after the rotors (4, 6) are produced.

## Revendications

1. Machine à piston rotatif qui fonctionne comme une pompe, un compresseur, un moteur ou un générateur,
- comprenant un premier rotor (4) et un deuxième rotor (6), le premier rotor (4) étant disposé en regard du deuxième rotor (6),
- dans laquelle le premier rotor (4) présente une première face frontale (8) dotée d'une première denture (10), dans laquelle le deuxième rotor (6) présente une deuxième face frontale (14) dotée d'une deuxième denture (16) et dans laquelle la première (10) et la deuxième denture (16) sont respectivement constituées d'au moins une dent (12, 18),
- dans laquelle les dentures (10, 16) sont mutuellement en prise de manière à ce que l'engrènement des dents (12) de la première denture (10) et des dents (18) de la deuxième denture (16) forme des espaces de travail (20), dans laquelle les volumes formés par les espaces de travail (20) sont modifiés par l'engrènement des dents (12, 18),
- dans laquelle les rotors (4, 6) sont logés dans un carter (22) doté d'une paroi interne (24), dans laquelle la paroi interne (24) reproduit sensiblement un contour externe (26) des rotors (4, 6),
- dans laquelle le premier rotor (4) présente un premier axe de rotation (I), dans laquelle le deuxième rotor (6) présente un deuxième axe de rotation (II), dans laquelle le premier axe de rotation (I) et le deuxième axe de rotation (II) forment un angle (ϕ) différent de 0°,
**caractérisée en ce que**
- au moins un premier aimant (46) présentant un champ magnétique permanent s'étend dans la direction d'un premier axe d'extension (III), dans laquelle ledit au moins un premier aimant (46) présente une première extrémité (50) réalisée sous forme de pôle sud (S) et une deuxième extrémité (52) réalisée sous forme de pôle nord (N) en regard de la première extrémité (50), dans laquelle ledit au moins un premier aimant (46) est disposé sur le premier (4) ou le deuxième rotor (6), dans laquelle le premier axe d'extension (III) est en contact avec une ligne circulaire ayant un centre et un diamètre, dans laquelle la ligne circulaire définit une surface circulaire, dans laquelle le centre est situé sur l'axe de rotation respectif (I, II), dans laquelle la surface circulaire est sensiblement perpendiculaire à l'axe de rotation respectif (I, II), dans laquelle le diamètre est supérieur à zéro,
- le carter (22) comporte au moins une bobine (42) pouvant être commandée électriquement qui est disposée sensiblement radialement par rapport aux axes de rotation (I, II), dans laquelle ladite au moins une bobine (42) est reliée de manière fixe au carter (22),
- pendant le fonctionnement, ladite au moins une bobine pouvant être commandée électriquement (42) interagit avec ledit au moins un premier aimant (46) de manière à ce que le rotor (4, 6) tourne.

2. Machine à piston rotatif selon la revendication 1,
**caractérisée en ce qu'**au moins un deuxième aimant (48) présentant un champ magnétique permanent s'étend dans la direction d'un deuxième axe d'extension (IV), dans laquelle ledit au moins un deuxième aimant (48) présente une première extrémité (50) réalisée sous forme de pôle sud (S) et une deuxième extrémité (52) réalisée sous forme de pôle nord (N) en regard de la première extrémité (50), dans laquelle ledit au moins un premier aimant (46) et ledit au moins un deuxième aimant (48) sont disposés en commun sur le premier (4) ou le deuxième rotor (6) de manière à ce que la première extrémité (50) dudit au moins un premier aimant (46) soit diamétralement opposée à la deuxième extrémité (52) dudit au moins un deuxième aimant (48), dans laquelle le deuxième axe d'extension (IV) est en contact avec la ligne circulaire.

3. Machine à piston rotatif selon la revendication 2,
**caractérisée en ce que** ledit au moins un premier aimant (46) et/ou ledit au moins un deuxième aimant (48) sont respectivement intégrés dans le premier (4) ou le deuxième rotor (6).

4. Machine à piston rotatif selon l'une des revendications 2 ou 3,
**caractérisée en ce que** ledit au moins un premier aimant (46) est intégré dans ladite au moins une dent (12) de la première denture (10) ou **en ce que** ledit au moins un deuxième aimant (48) est intégré dans ladite au moins une dent (18) de la deuxième denture (16).

5. Machine à piston rotatif selon l'une des revendications 2 à 4,
**caractérisée en ce que** la première extrémité (50) dudit au moins un premier aimant (46) et la deuxième extrémité (52) dudit au moins un deuxième aimant (48) sont reliées au moyen d'un noyau de rétroaction (54), dans laquelle le noyau de rétroaction (54) est réalisé sous la forme d'un anneau, dans laquelle l'anneau est intégré dans l'un des rotors (4, 6).

6. Machine à piston rotatif selon l'une des revendications 1 à 5,
**caractérisée en ce qu'**un premier élément de support (36) est disposé sur la première denture (10) et un deuxième élément de support (38) est disposé sur la deuxième denture (16) pour recevoir des forces s'exerçant sur la denture pendant le déplacement et/ou la compression du fluide, dans laquelle ledit au moins un aimant (46, 48) est intégré dans au moins l'un des deux éléments de support (36, 38).

7. Machine à piston rotatif selon l'une des revendications 1 à 6,
**caractérisée en ce que** le premier (4) et/ou le deuxième rotor (6) sont constitués au moins partiellement d'une matière plastique qui peut être magnétisée après fabrication des rotors (4, 6).

8. Machine à piston rotatif qui fonctionne comme une pompe, un compresseur, un moteur ou un générateur,
- comprenant un premier rotor (4) et un deuxième rotor (6), le premier rotor (4) étant disposé en regard du deuxième rotor (6),
- dans laquelle le premier rotor (4) présente une première face frontale (8) dotée d'une première denture (10), dans laquelle le deuxième rotor (6) présente une deuxième face frontale (14) dotée d'une deuxième denture (16) et dans laquelle la première (10) et la deuxième denture (16) sont respectivement constituées d'au moins une dent (12, 18),
- dans laquelle les dentures (10, 16) sont mutuellement en prise de manière à ce que l'engrènement des dents (12) de la première denture (10) et des dents (18) de la deuxième denture (16) forme des espaces de travail (20), dans laquelle les volumes formés par les espaces de travail (20) sont modifiés par l'engrènement des dents (12, 18),
- dans laquelle les rotors (4, 6) sont logés dans un carter (22) doté d'une paroi interne (24), dans laquelle la paroi interne (24) reproduit sensiblement un contour externe (26) des rotors (4, 6),
- dans laquelle le premier rotor (4) présente un premier axe de rotation (I), dans laquelle le deuxième rotor (6) présente un deuxième axe de rotation (II), dans laquelle le premier axe de rotation (I) et le deuxième axe de rotation (II) forment un angle (ϕ) différent de 0°, **caractérisée en ce que**
- au moins un premier aimant (46) présentant un champ magnétique permanent s'étend dans la direction d'un premier axe d'extension (III), dans laquelle ledit au moins un premier aimant (46) présente une première extrémité (50) réalisée sous forme de pôle sud (S) et une deuxième extrémité (52) réalisée sous forme de pôle nord (N) en regard de la première extrémité (50), dans laquelle ledit au moins un premier aimant (46) est disposé dans le premier (4) ou le deuxième rotor (6) de manière à ce que le premier axe d'extension (III) soit sensiblement parallèle à l'axe de rotation respectif (I, II),
- le carter (22) comporte au moins une bobine (42) pouvant être commandée électriquement, dans laquelle ladite au moins une bobine (42) est disposée en regard de la première (8) ou de la deuxième face frontale (14), dans laquelle ladite au moins une bobine (42) est reliée de manière fixe au carter (22),
- pendant le fonctionnement, ladite au moins une bobine (42) pouvant être commandée électriquement interagit avec ledit au moins un premier aimant (46) de manière à ce que le rotor (4, 6) tourne.

9. Machine à piston rotatif selon la revendication 8,
**caractérisée en ce qu'**au moins un deuxième aimant (48) présentant un champ magnétique permanent s'étend dans la direction d'un deuxième axe d'extension (IV), dans laquelle le deuxième aimant (48) présente une première extrémité (50) réalisée sous forme de pôle sud (S) et une deuxième extrémité (52) réalisée sous forme de pôle nord (N) en regard de la première extrémité (50), dans laquelle les premier (46) et deuxième (48) aimants sont respectivement sensiblement intégrés ensemble dans le premier (4) ou le deuxième (6) rotors, de manière à ce que la première extrémité (50) du premier aimant (46) et la deuxième extrémité (52) du deuxième aimant (48) soient respectivement adjacentes, dans laquelle ledit au moins un premier (46) et ledit au moins un deuxième aimant (48) forment ensemble un premier cylindre creux droit (56) présentant une section transversale sensiblement annulaire, dans laquelle les axes d'extension (III, IV) sont disposés sensiblement parallèlement à l'axe de rotation (I, II) respectif.

10. Machine à piston rotatif selon la revendication 9,
**caractérisée en ce qu'**au moins un troisième aimant (60) à champ magnétique permanent s'étend dans la direction d'un troisième axe d'extension (V), dans laquelle le troisième aimant (60) présente une première extrémité (66) réalisée sous forme de pôle sud (S) et une deuxième extrémité (68) réalisée sous forme de pôle nord (N) en regard de la première extrémité (66), dans laquelle au moins un quatrième aimant (62) présentant un champ magnétique permanent s'étend dans la direction d'un quatrième axe d'extension (VI), dans laquelle le quatrième aimant (62) présente une première extrémité (66) réalisée sous forme de pôle sud (S) et une deuxième extrémité (68) réalisée sous forme de pôle nord (N) en regard de la première extrémité (66), dans laquelle le troisième (60) et le quatrième aimant (62) sont disposés en commun dans le premier (4) ou le deuxième rotor (6) de manière à ce que la première extrémité (66) du troisième aimant (60) et la deuxième extrémité (68) du quatrième aimant (62) soient adjacentes, dans laquelle ledit au moins un troisième (60) et ledit au moins un quatrième aimant (62) forment ensemble un deuxième cylindre creux droit (58) présentant une section transversale sensiblement annulaire, dans laquelle les axes d'extension (V, VI) sont disposés sensiblement parallèlement à l'axe de rotation (I, II) respectif, dans laquelle la première extrémité (50) du premier aimant (46) et la deuxième extrémité (68) du quatrième aimant (62) sont adjacentes et, respectivement, la deuxième extrémité (52) du deuxième aimant (48) et la première extrémité (66) du troisième aimant (60) sont adjacentes.

11. Machine à piston rotatif selon la revendication 10,
**caractérisée en ce que** le premier (56) et le deuxième cylindre creux (58) sont disposés concentriquement autour du premier (I) ou du deuxième axe de rotation (II).

12. Machine à piston rotatif selon l'une des revendications 9 à 11,
**caractérisée en ce que** le premier (4) et/ou le deuxième rotor (6) sont constitués d'une matière plastique qui peut être magnétisée après fabrication des rotors (4, 6).
